# EUROPÄISCHE PATENTSCHRIFT

(11) **EP 1 401 618 B1**
(45) Veröffentlichungstag und Bekanntmachung des Hinweises auf die Patenterteilung: **06.04.2005**
(21) Anmeldenummer: 02748758.6
(22) Anmeldetag: 11.06.2002
(51) Int. Cl.: B25J 19/06, B23K 9/28, B23Q 11/04

(54) **WERKZEUGHALTER ZUR KUPPLUNG EINES WERKZEUGES AN EINEM HANDLINGGERÄT**
TOOLHOLDER FOR COUPLING A TOOL TO A HANDLING DEVICE
PORTE-OUTIL POUR ACCOUPLER UN OUTIL A UN APPAREIL DE MANIPULATION

(30) Priorität: 03.07.2001 DE 10132117
(43) Veröffentlichungstag der Anmeldung: 31.03.2004
(73) Patentinhaber: Alexander Binzel Schweisstechnik GmbH & Co. KG, 35418 Buseck (DE)
(72) Erfinder: MÜNCH, Heinz-Martin, 35305 Grünberg (DE); SCHWARZ, Jörg, 35418 Buseck (DE)
(74) Vertreter: Müller, Eckhard, Dr.
(86) Internationale Anmeldenummer: PCT/EP2002/006359
(87) Internationale Veröffentlichungsnummer: WO 2003/004225

(56) Entgegenhaltungen:
- WO-A-95/07802
- DE-A- 3 333 979
- DE-A- 3 445 849
- US-A- 4 954 005

## Beschreibung

Die Erfindung betrifft einen Werkzeughalter zur Kupplung eines Werkzeuges, insbesondere eines Schweißbrenners oder Schneidbrenners, an einem Handlinggerät, insbesondere einem Industrieroboter, mit einer ersten Halterung zur Befestigung der Werkzeuges am Werkzeughalter und mit einer zweiten Halterung, zum Beispiel einem Gehäuse, zur Befestigung des Werkzeughalters am Handlinggerät, wobei die ersten und zweiten Halterungen relativ zueinander gegen eine Federvorspannung von Federelementen auslenkbar beziehungsweise verstellbar sind, und mit einer Sicherheitsschaltung zur Deaktivierung des Handlinggerätes und/oder des Werkzeuges bei einer Überschreitung vorbestimmter Auslenkungen beziehungsweise Verstellungen, wobei ein mit der ersten Halterung verbundenes Bauteil in Z-Richtung (Werkzeughalter-Längsachse) verstellbar beziehungsweise verfahrbar und in X- und/oder Y-Richtung auslenkbar, wie verschwenkbar oder kippbar, bezüglich der zweiten Halterung ist und bei Auslenkung in X- und/oder Y-Richtung ein oder mehrere von mehreren ersten Federelementen mit jeweils einer ersten Federhärte und bei Verstellung in Z-Richtung wenigstens ein zweites Federelement mit einer zweiten, unterschiedlichen Federhärte von dem Bauteil auf elastische Deformation beansprucht werden.

Ein derartiger Werkzeughalter ist bereits aus der US 4,639,184 bekannt mit zwei gegeneinander schwenkbaren sowie axial verstellbaren Teilen, wobei das eine Teil mit einem Werkzeug und das andere Teil mit einem Roboterarm verbunden ist. Die Teile sind mittels vier Federn in eine Neutralstellung vorgespannt, wobei drei Druckfedern in äußeren, umfangsmäßig im wesentlich gleich verteilten Bohrungen des einen Teils angeordnet sind. Weiterhin ist in einer zentralen Bohrung des anderen Teils eine weitere Druckfeder vorgesehen, welche sich ebenfalls an dem oberen Teil abstützt. Bei einer Auslenkung in X- oder Y-Richtung werden einige der umfangsmäßig verteilten äußeren Federn auch die zentrale Feder beansprucht. Bei einer Auslenkung in Z-Richtung werden alle Federn gemeinsam in gleicher Weise beansprucht. Die Vorspannkraft der zentralen Feder kann mittels einer Stellschraube variiert werden, wobei die zentrale Feder und die umfangsmäßig verteilten äußeren Federn gegebenenfalls unterschiedliche Federhärten besitzen.

Ein weiterer Werkzeughalter ist beispielsweise aus der EP 0 249 774 A1 bekannt, welcher als Kollisionsschutz ausgebildet ist, mit zwei elastisch miteinander verbundenen Bauteilen, die bei einer Kollision über eine Lageveränderung eine Unterbrechung der Maschinenbewegung beziehungsweise des Handlinggerätes auslösen. Um das Gewicht und die Baulänge des Kollisionsschutzes zu verringern und eine hohe Wiederholgenauigkeit bei der Einstellung der Brennerposition zu erreichen, sind die Bauteile als kraftbeaufschlagter Kegelsitz ausgebildet. Zwischen den beiden Bauteilen sind drei Spiraldruckfedern in einem Winkelabstand von 120° angeordnet, die die Bauteile gegeneinander vorspannen und im Falle einer Kollision des Werkzeuges mit einem Gegenstand eine Auslenkbarkeit der beiden Bauteile zulassen sowie nach Beseitigung des Hindernisses die beiden Bauteile in die Ausgangs- beziehungsweise Neutralposition zurückstellen.

Im allgemeinen werden diese Roboterhalterungen an einem Industrie-Roboter zwischen Roboter und dem Werkzeug als Kollisionsschutz für Werkzeug und Roboter angebracht. Die Werkzeughalter haben die Aufgabe, bei einer Kollision diese auszugleichen sowie einen Schalter zur Störungsbeziehungsweise Kollisionsmeldung zu betätigen und anschließend nach Beseitigung der Störung das Werkzeug auf seinen vorbestimmten Ausgangspunkt vor der Kollision zurückzustellen.

Zu dieser Rückstellung sind folgende Systeme aus dem Stand der Technik bekannt. Die Werkzeughalter sollen in allen drei Koordinatenrichtungen X, Y und Z die Kollision erkennen. Bei Anwendung mit höheren Tragkräften müssen demzufolge die Rückstellsysteme verstärkt werden, was zu überproportionalen Z-Komponenten führt. Die pneumatischen Lösungen weisen zusätzlich den Nachteil auf, daß eine Druckluftversorgung über das Handlinggerät erforderlich ist, was insbesondere bei Werkzeugen im Bereich der Schweißtechnik unerwünscht ist.

Ein weiterer Werkzeughalter ist aus der in der Figur 16 offenbarten Ausführungsform des Dokuments US 4,954,005 bekannt, welcher als Kollisionsschutz ausgebildet ist, mit ersten Federelementen (72',87') und einem in Serie nachgeschaltet zweiten Federelement (398) zum Dämpfen von Stößen. Das Federelement (398) weist eine wesentlich kleinere Federhärte auf. Damit wird bei frontalen Stößen (in der Z- Richtung) zunächst nur das zweite Federelement (398) und dann - bei stärkeren Kollisionskräften - auch die ersten Federelemente (72', 87') beansprucht.

Bei seitlichen Stößen (in X- und/oder Y- Richtung) können dagegen nur die ersten Federelemente (72',87') beansprucht werden. Eine zweistufige Dämpfung ist folglich in diesem Fall nachteilig nicht möglich.

Der Erfindung liegt demgegenüber die Aufgabe zugrunde, einen Werkzeughalter mit den eingangs genannten Merkmalen auszubilden, welcher sowohl frontale (in der Z- Richtung) als auch seitliche (in X- und/oder Y- Richtung) Stöße zweistufig dämpfen kann.

Diese Aufgabe wird dadurch gelöst, daß die Federhärte eines einzigen ersten Federelements kleiner als die Federhärte des wenigstens einen zweiten Federelements ist.

Hierdurch wird ermöglicht, daß Stöße in Z-Richtung zunächst von dem zweiten federelastischen Element und Stöße in X- und/oder Y-Richtung zunächst von einem Teil der ersten federelastischen Elemente aufgenommen werden. Bei stärkeren Kollisionskräften werden Stöße in Z-Richtung anschließend von der Summe aller ersten federelastischen Elemente zusätzlich aufgenommen, während bei starken in X- und/oder in Y-Richtung wirkenden Kräften anschließend diese Kräfte von dem zweiten Federelement aufgenommen werden. In der ersten Stufe werden somit in X- und/oder Y-Richtung wirkende Kräfte von einem Teil der ersten federelastischen Elemente aufgenommen, während in der zweiten Stufe die in Z-Richtung wirkenden Kräfte von dem zweiten federelastischen Element aufgefangen werden.

Durch diese Maßnahmen ist eine Zerlegung der einwirkenden Kräfte in Richtung der Z-Komponente sowie der X- und Y-Komponente möglich, so daß eine Nivellierung der Auslösekräfte stattfindet und bei hoher Krafteinwirkung ein Zusammenspiel der Rückstellkomponenten der Federelemente zu einer hohen Kraftaufnahme führt. Unter Federelementen sollen im Rahmen der vorliegenden Anmeldung solche Maschinenelemente verstanden werden, die sich bei Belastung elastisch verformen und die bevorzugt als Zug- oder Druck-Federn in Form von Schrauben- oder Spiralfedern ausgebildet sind. Unter der Federhärte soll die Steigung der Federkraft-Federweg-Kennlinie des Federelements bei einer bestimmten Formänderung verstanden werden. Im Falle einer linearen Kennlinie ist die Federhärte identisch mit der Federkonstanten, dem Quotienten aus Federbelastung und zugehöriger Formänderung.

Nach einer ersten vorteilhaften Ausgestaltung der Erfindung ist die Federhärte der Summe der ersten Federelemente größer als die Federhärte des wenigstens einen zweiten Federelements. Aufgrund dieser Maßnahme ist dafür Sorge getragen, daß bei einer Kollision beziehungsweise Krafteinwirkung ausschließlich in Z-Richtung zunächst das zweite Federelement gestaucht wird, bis es etwa Blocklänge erreicht hat, wobei anschließend dann auch die ersten Federelemente bis auf maximale Blocklänge gestaucht werden können. Es sei angemerkt, daß anstelle eines einzigen zweiten Federelementes auch mehrere zweite Federelemente zum Einsatz kommen können; in diesem Fall ist für die Bemessung der Federhärten dann die Federhärte der Summe der zweiten Federelemente und nicht nur der Federhärte des einzigen zweiten Federelements zum Ansatz zu bringen.

Weiterhin erweist es sich als vorteilhaft, daß die mehreren ersten Federelemente jeweils die erste Federhärte aufweisen.

Insbesondere hat es sich als vorteilhaft erwiesen, die Anordnung und Ausbildung der ersten Federelemente derart zu gestalten, daß bei in X- und/oder Y-Richtung wirkenden Kollisionskräften ein erstes federelastisches Element bis ca. ein Drittel der Gesamtzahl der ersten federelastischen Elemente auf Druck beansprucht werden.

Des weiteren hat es sich als vorteilhaft erwiesen, daß das Bauteil als flächiger, tellerförmiger oder ringförmiger Auslöseflansch und die zweite Halterung als den Auslöseflansch und die Federelemente aufnehmendes, insbesondere topfförmiges Gehäuse ausgebildet sind, wobei nach einer bevorzugten Ausgestaltung das Gehäuse mit einem verschraubbaren Deckel verschließbar ist. Aufgrund dieser Maßnahme läßt sich der Werkzeughalter äußerst kompakt gestalten und weist ein vergleichbar geringes Gewicht auf.

Nach einer anderen vorteilhaften Weiterbildung der Erfindung liegt der Auslöseflansch in der Neutralstellung beziehungsweise unbeanspruchten Ausgangsstellung ohne Einwirkung äußerer Kräfte unter der Wirkung der Federvorspannung, insbesondere in einem Außenringbereich mehreren ringförmig, insbesondere kreisringförmig im Gehäuse angeordneten Fixierelementen, zum Beispiel Kugeln, Rollen oder dergleichen, an. Aufgrund dieser Maßnahme ist ein Verschwenken beziehungsweise Kippen des Auslöseflansches bei einwirkenden Kollisionskräften in X- und/oder Y-Richtung möglich, und zwar um die in Stoßrichtung liegenden Fixierelemente. Diese Fixierelemente sind bevorzugt auf einem Teilkreis des Auslöseflansches verteilt angeordnet, so daß näherungsweise gewährleistet ist, daß der Auslöseflansch in etwa in Stoßrichtung ausgelenkt, verschwenkt oder gekippt werden kann.

Nach einer vorteilhaften Weiterbildung der Erfindung weist der Auslöseflansch, insbesondere in dem Außenringbereich Einsenkungen auf, die mit der Position der Fixierelemente korrespondieren und diese teilweise aufnehmen, wobei die Fixierelemente mittels einer Haltevorrichtung, wie Kugelkäfig oder dergleichen, gehalten sind. Aufgrund dieser Maßnahmen ist zum einen dafür Sorge getragen, daß bei einer Rückstellung des Auslöseflansches nach Beseitigung der Kollision beziehungsweise des Kollisionshindernisses eine exakte Positionierung des Auslöseflansches in der Neutralstellung gewährleistet ist, wobei die Fixierelemente in die zugeordneten Einsenkungen des Auslöseflansches eintauchen. Andererseits sind die Fixierelemente mittels der Haltevorrichtung beziehungsweise des Kugelkäfigs auch bei Verschwenken des Auslöseflansches sicher in ihrer Lage zum Deckel beziehungsweise zum Gehäuse gehalten, so daß nach Rückstellung der Auslöseflansch sicher in die Ausgangsposition zurückfinden kann. Weiterhin hat der Kugelkäfig die Aufgabe, den Auslöseflansch nach dem Kippen als Drehpunkt abzustützen.

Nach einer konstruktiven vorteilhaften Ausgestaltung wird der Auslöseflansch in einem unterseitigen Außenringbereich von mehreren, insbesondere vier bis zwölf, bevorzugt sechs bis neun ersten, ein Federpaket bildenden Federelementen mit Federvorspannung beaufschlagt. In diesem Fall kann die Federhärte des zweiten elastischen Elements etwa das drei- bis vierfache eines einzelnen Federelements der ersten Federelemente betragen. Bei einem Stoß in X- und/oder Y-Richtung werden die nach individueller Stoßrichtung nur etwa ein bis drei erste Federelemente gestaucht, so daß in diesem Fall zunächst das zweite Federelement nicht auf Stauchung beansprucht wird. Bei einem Stoß in Z-Richtung ist die Federhärte der Summe der ersten Federelemente bevorzugt ca. sechs bis neun größer als die Federhärte des zweiten Federelements, so daß in diesem Fall zunächst das zweite Federelement auf Stauchung beansprucht wird.

Nach einer anderen vorteilhaften Ausgestaltung der Erfindung sind die ersten Federelemente zwischen dem Bauteil beziehungsweise Auslöseflansch und einem in Z-Richtung verstellbaren oder verfahrbaren, insbesondere tellerförmigen Federkolben, eingespannt, der seinerseits unterseitig von der Federvorspannung des wenigstens einen zweiten Federelements beaufschlagt ist. Aufgrund dieser konstruktiven Maßnahme wird die Zweistufigkeit der Kraftaufteilung der ersten und zweiten Federelemente erreicht, wobei bei Stößen in X- und/oder Y-Richtung aufgrund der Kipp- beziehungsweise Schwenkbewegung des Auslöseflansches zunächst die in dem Außenringbereich angreifenden ersten Federelemente beziehungsweise ein Teil hiervon beansprucht werden. Bei Stößen in Z-Richtung werden sämtliche ersten Federelemente beansprucht und wirken als quasi starre Kopplung zwischen Auslöseflansch und Federkolben aufgrund der in der Summe größeren Federhärte, so daß dann zunächst das zweite Federelement auf Stauchung beansprucht wird.

Bevorzugt ist der Federkolben mit einem zentralen Zapfen, insbesondere Hohlzapfen, versehen, der in einer Bohrung des Gehäuses in Z-Richtung verfahrbar oder verschiebbar geführt ist. Aufgrund dieser Maßnahme ist für eine sichere und exakte Verfahrbarkeit des Federkoibens innerhalb des Gehäuses in Z-Richtung gesorgt.

Nach einer anderen vorteilhaften Ausgestaltung der Erfindung ist zwischen dem Bauteil beziehungsweise Auslöseflansch und dem Federkolben eine Lochplatte angeordnet, in deren Löchern jeweils eines der ersten Federelemente mit leichtem Spiel aufgenommen ist, wodurch für eine räumlich fixierte Positionierung der ersten Federelemente innerhalb des Gehäuses gesorgt ist.

Die Lochplatte weist nach einer anderen vorteilhaften Weiterbildung der Erfindung einen zentralen Zapfen oder Kolben auf, der in Z-Richtung verschiebbar in dem Gehäuse, insbesondere in dem Hohlzapfen des Federkolbens, geführt ist. Im letztgenannten Fall weist der Federkolben eine zentrische Durchbrechung zum Hohlzapfen auf, in der der Zapfen der Lochplatte in Z-Richtung verschiebbar geführt ist.

Zwischen der Oberseite des Federkolbens und der Unterseite der Lochplatte ist eine Druckfeder gespannt, die dazu dient, die Lochplatte nach Auslösung in einem Kollisionsfall und Beseitigung des Kollisionshindernisses wieder in die Neutral- oder Ausgangsstellung zu überführen.

Es hat sich des weiteren als vorteilhaft erwiesen, daß am Bauteil oder an der Lochplatte oder am Federkolben eine Nase, ein Schaltelement oder dergleichen angeordnet ist, dem gehäuseseitig ein Schalter zugeordnet ist. Da die Krafteinleitung eines Kollisionsstoßes in jedem Fall über den Auslöseflansch auch auf die Lochplatte übertragen wird, unabhängig davon, ob eines oder mehrere der ersten Federelemente oder aber das zweite Federelement gestaucht werden, erweist es sich als vorteilhaft, die Nase insbesondere an der Lochplatte anzuordnen, so daß bei Überschreiten einer vorbestimmten Auslenkung beziehungsweise Verstellung der Lochplatte mittels der Nase eine Schalteinrichtung betätigt werden kann und eine Notabschaltung für das Handlinggerät beziehungsweise das Werkzeug durchgeführt werden kann.

Hinsichtlich der Dimensionierung der Federhärte des zweiten Federelements hat es sich als vorteilhaft erwiesen, daß diese nach einer besonderen Ausführungsform etwa dem drei- bis vierfachen der Federhärte eines einzigen ersten Federelements entspricht. Dieser Dimensionierung liegt die Überlegung zugrunde, daß bei einem Stoß in X- und/oder Y-Richtung über den Auslöseflansch nur eine oder ein Teil der ersten Federelemente auf Kompression beansprucht werden. Bei dem Einsatz von etwa acht bis neun ersten Federelementen hat sich die vorliegende Bemessung als vorteilhaft erwiesen. Werden mehr oder weniger erste Federelemente zu einem Federpaket zusammengeschlossen, kann sich die Bemessung der Federhärte des zweiten Federelements entsprechend ändern.

Aus konstruktiven Gründen hat es sich ebenfalls als vorteilhaft erwiesen, daß die ersten Federelemente jeweils eine im wesentlichen etwa gleiche Federhärte besitzen, so daß die ersten Federelemente unter sich bevorzugt im wesentlichen identisch ausgebildet sein können.

Schließlich können die ersten und zweiten Federelemente bevorzugt als Druck-Schraubenfedern ausgebildet sein.

Weitere Merkmale, Vorteile, Anwendungsmöglichkeiten und Ausgestaltungen der vorliegenden Erfindung ergeben sich aus der nachfolgenden Beschreibung eines Ausführungsbeispieles. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Es zeigen:

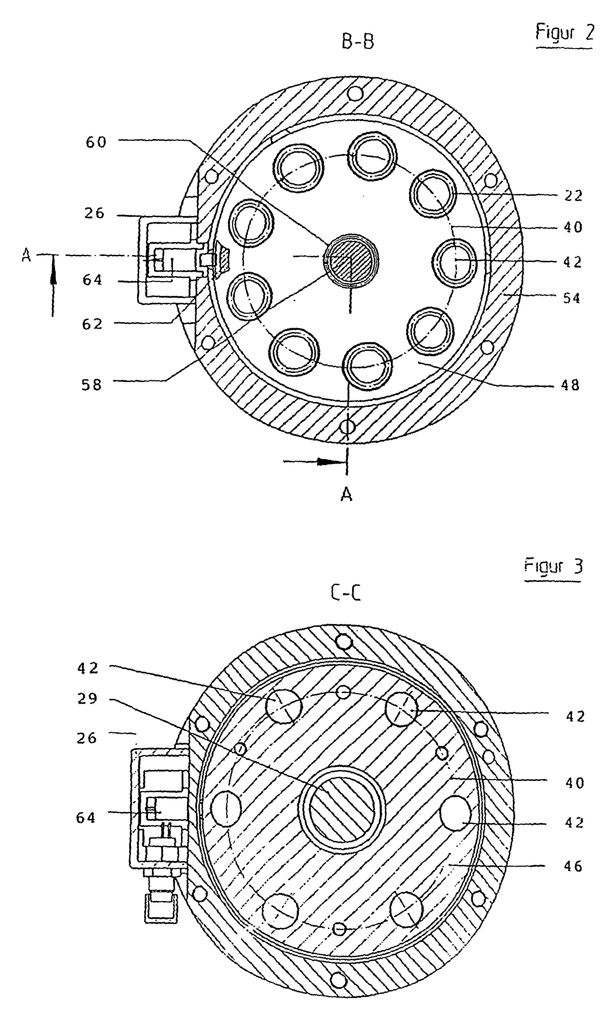

- Figur 1: eine Schnittdarstellung durch ein Ausführungsbeispiel des erfindungsgemäßen Werkzeughalters entlang der Schnittlinie A-A der Figur 2, wobei sich der Auslöseflansch in der Neutralstellung ohne Kollisionsbeanspruchung befindet,
- Figur 2: den Werkzeughalter der Figur 1 entlang der Schnittlinie B-B,
- Figur 3: den Werkzeughalter der Figur 1 entlang der Schnittlinie C-C,
- Figur 4: den Werkzeughalter der Figur 1 während eines Kollisionsfalles, in dem der Auslöseflansch aus der Neutralstellung herausgekippt beziehungsweise herausgeschwenkt ist und
- Figuren 5 und 6: einen erfindungsgemäßen Werkzeughalter in Kombination mit einem Werkzeug und einem teilweise dargestellten Handlinggerät zu Veranschaulichung der verschiedenen Kollisionsfälle und der dabei auftretenden Kollisionskräfte.

In den Figuren ist ein Werkzeughalter 10 zur Kupplung eines Werkzeuges 12, insbesondere Schweißbrenners oder Schneidbrenners, an einem Handlinggerät 14, insbesondere einem Industrieroboter, dargestellt, mit einer ersten Halterung 16 zur Befestigung des Werkzeuges 12 am Werkzeughalter 10 und mit einer zweiten Halterung 18, zum Beispiel einem Gehäuse 20, zur Befestigung des Werkzeughalters 10 am Handlinggerät 14. Die ersten und zweiten Halterungen 16, 18 sind relativ zueinander gegen eine Federvorspannung von Federelementen 22, 24 auslenkbar beziehungsweise verstellbar.

Weiterhin ist eine Sicherheitsschaltung 26 zur Deaktivierung des Handlinggerätes 14 und/oder des Werkzeuges 12 bei einer Überschreitung vorbestimmter Auslenkungen beziehungsweise Verstellungen vorgesehen. Mit der ersten Halterung 16 ist beispielsweise über einen Zapfen 29 ein Bauteil 28 verbunden, welches in Z-Richtung 30, die mit einer Werkzeughalter-Längsachse zusammenfällt, verstellbar beziehungsweise verfahrbar und in X- und/oder Y-Richtung 32, 34 auslenkbar, beispielsweise verschwenkbar oder kippbar, bezüglich der zweiten Halterung 18 ist. Bei einer Auslenkung des Bauteils 28 in X- und/oder Y-Richtung 32, 34 werden ein oder ein Teil von mehreren ersten Federelementen 22 mit jeweils einer ersten Federhärte und bei Verstellung des Bauteils 28 in Z-Richtung 30 wenigstens ein zweites Federelement 24 mit einer zweiten, unterschiedlichen Federhärte auf Druck beziehungsweise Kompression beansprucht. Die Federhärten der Summe der ersten Federelemente 22 ist größer als die Federhärte des wenigstens einen zweiten Federelements 24 oder, bei Einsatz mehrerer zweiter Federelemente 24, größer als die Summe der Federhärten der zweiten Federelemente 24. Weiterhin ist die Federhärte eines einzigen ersten Federelements 22 kleiner als die Federhärte des wenigstens einen zweiten Federelements 24. Die ersten Federelemente 22 und das wenigstens eine zweite Federelement 24 sind in Serie beziehungsweise zweistufig auslösbar einander nachgeschaltet und angeordnet. Das Bauteil 28 ist gemäß der bevorzugten Ausgestaltung als insbesondere flächiger, tellerförmiger oder ringförmiger Auslöseflansch 36 ausgebildet. Die zweite Halterung 18 ist als bevorzugt topfförmiges Gehäuse 20 ausgebildet, welches den Auslöseflansch 36 sowie die Federelemente 22, 24 aufnimmt. Das Gehäuse 20 ist mit einem verschraubbaren Deckel 38 verschließbar, der eine Durchbrechung aufweist, durch die ein Zapfen 29 ragt, der den Auslöseflansch 36 mit der ersten Halterung verbindet. Dabei ist der Zapfen 29 bevorzugt von einer Dichtmanschette umfaßt, welche am Deckel 38 lösbar befestigt ist.

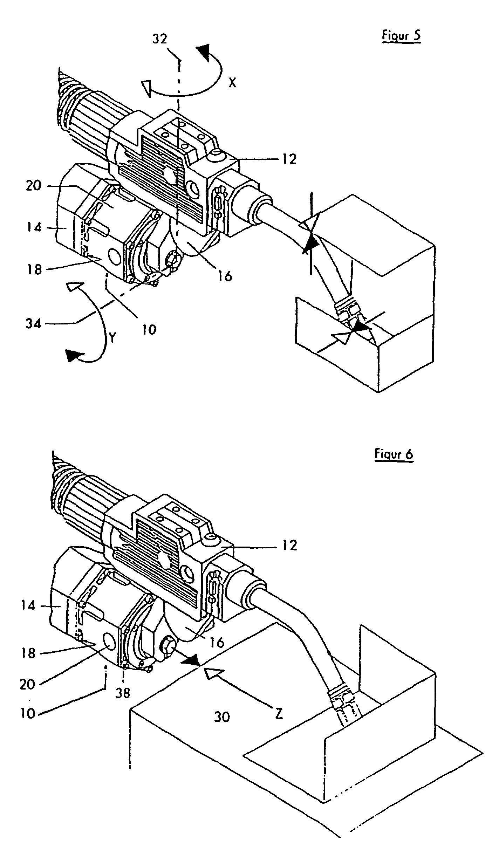

Der Auslöseflansch 36 ist in einer Neutralstellung, also ohne Einwirkung von Kollisionskräften, unter Wirkung der Federvorspannung in einem Außenringbereich 40 an mehrere ringförmig beziehungsweise kreisringförmig angeordnete Fixierelemente 42 gepreßt, die beispielsweise als Kugeln ausgebildet sind. Die Anordnung der Fixierelemente 42 ist insbesondere aus Figur 3 ersichtlich. Des weiteren besitzt der Auslöseflansch 36 in einem oberseitigen Außenringbereich 40 Einsenkungen 44, die mit der Positionierung der Fixierelemente 42 korrespondieren und diese teilweise aufnehmen. Weiterhin sind die Fixierelemente 42 mittels einer Haltevorrichtung, beispielsweise einem Kugelkäfig 46, in dem Deckel 38 gehalten. Vergleichbare Einsenkungen können auch in der Unterseite des Deckels 38 vorgesehen sein, in denen die Fixierelemente 42 ebenfalls teilweise aufgenommen sind.

In einem unterseitigen Außenringbereich 40 ist der Auslöseflansch 36 von mehreren, im Ausführungsbeispiel neun ersten Federelementen 22 mit Federvorspannung beaufschlagt, wobei diese ersten Federelemente 22 ein Federpaket bilden. Die ersten Federelemente 22 beziehungsweise das Federpaket sind zwischen dem Bauteil 28 beziehungsweise dem Auslöseflansch 36 und einem in Z-Richtung verstellbaren oder verfahrbaren, insbesondere tellerförmigen Federkolben 48 eingespannt, der seinerseits unterseitig von der Federvorspannung des wenigstens einen zweiten Federelements 24 beaufschlagt ist. Der Federkolben 48 besitzt einen zentralen, bevorzugt als Hohlzapfen 50 ausgebildeten, Zapfen, der in einer Bohrung 52 des Gehäuses 20 in Z-Richtung 30 verschiebbar geführt ist. Zwischen dem Bauteil 28 beziehungsweise Auslöseflansch 36 und dem Federkolben 48 ist eine Lochplatte 54 angeordnet, die im wesentlichen Kreisform aufweisen kann und in deren Löchern 56 die ersten Federelemente mit leichtem Spiel aufgenommen sind. Die Lochplatte 54 weist einen Zapfen oder Kolben 58 auf, der in Z-Richtung 30 verschiebbar in dem Gehäuse 20, insbesondere in dem Hohlzapfen 50 geführt ist. Zwischen der Oberseite des Federkolbens 48 und der Unterseite der Lochplatte 54 ist eine Druckfeder 60 gespannt. An der Lochplatte 54 ist eine Nase 62, ein Schaltelement oder dergleichen angeordnet, dem gehäuseseitig ein Schalter 64 zugeordnet ist.

Bevorzugt weist die Federhärte des zweiten Federelements 24 etwa den drei- bis vierfachen Wert der Federhärte eines einzigen Federelements 22 auf. Die ersten Federelemente 22 besitzen jeweils eine im wesentlichen gleiche Federhärte. Die Federelemente 22, 24 sind bevorzugt als Druckfedern beziehungsweise Schraubenfedern ausgebildet.

Im Betrieb des Werkzeughalters 10 kann, wie in den Figuren 5 und 6 angedeutet, ein Kollisionsfall eintreten, wobei das Werkzeug 12 gemäß Figur 5 in X- und/oder Y-Richtung von Kollisionskräften beziehungsweise gemäß Figur 6 in Z-Richtung von Kollisionskräften beaufschlagt werden kann. Wird der Werkzeughalter 10 ausschließlich durch in Z-Richtung 30 wirkende Kollisionskräfte beaufschlagt, verfährt das Bauteil 28 beziehungsweise der Auslöseflansch 36 ebenfalls ausschließlich in 2-Richtung, wobei eine Kipp- oder Schwenkbewegung, wie sie in Figur 4 dargestellt ist, nicht auftritt. Da die Federhärte der Summe der ersten Federelemente 22 größer als die Federhärte des wenigstens einen zweiten Federelements 24 ist, wird zunächst im wesentlichen nur das zweite Federelement 24 auf Kompression beziehungsweise Stauchung beansprucht, wobei Auslöseflansch 36, Lochplatte 54 sowie Federkolben 48 gemeinsam in Z-Richtung 30 nach unten in Richtung des Bodens des Gehäuses 20 verfahren werden.

Nach einem vorwählbaren Verfahrweg wird die Sicherheitsschaltung 26 aktiviert, wobei die Nase 62 einen Schalthebel eines Schalters 64 betätigt beziehungsweise freigibt. Nach Betätigung des Schalters 64 werden das Handlinggerät 14 und/oder das Werkzeug 12 abgeschaltet.

Wirken sehr hohe Kollisionskräfte in Z-Richtung, so wird zunächst das zweite Federelement 24 bis etwa auf Blocklänge gestaucht, wobei anschließend auch die ersten Federelemente 22 des Federpaktes auf Kompression oder Stauchung beansprucht werden, bis auch diese ihre Blocklänge erreicht haben.

Insgesamt können durch die erfindungsgemäßen Maßnahmen äußerst hohe Kollisionskräfte kompensiert werden.

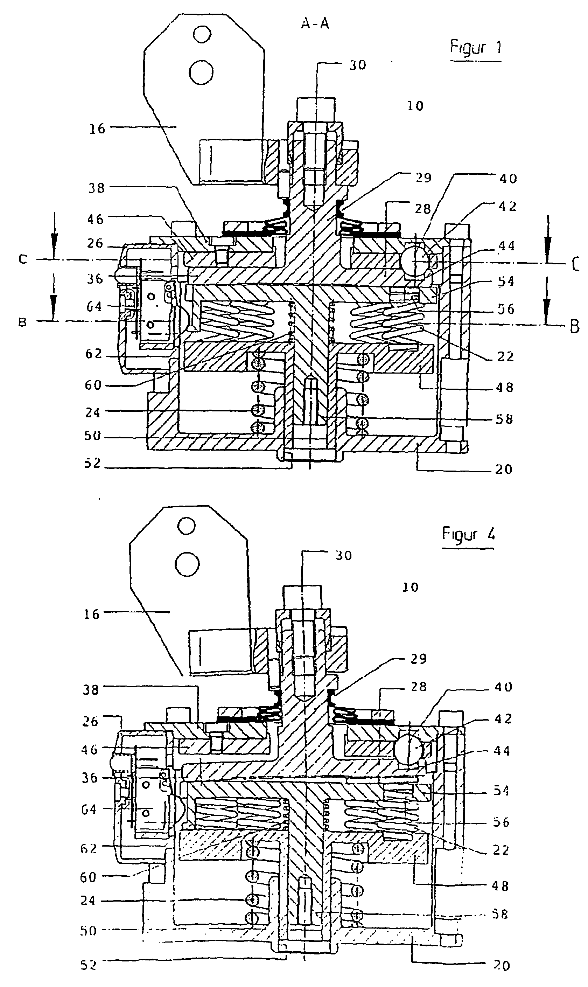

Nach Beseitigung des Kollisionshindernisses werden der Federkolben 48 aufgrund der Wirkung des zweiten Federelements 24 und der Auslöseflansch 36 aufgrund der Federvorspannung der Summe der ersten Federelemente 22 wieder in die in Figur 1 dargestellte Neutralposition verfahren. Die Lochplatte 54 wird unter der Wirkung der Druckfeder 60 in die angezogene Stellung der Figur 1 zurückgestellt. Aufgrund der am Auslöseflansch 36 vorgesehenen Einsenkungen 44 wird die Neutralstellung des Auslöseflansches 36 exakt und reproduzierbar eingestellt. Dabei hat der Kugelkäfig 46 die Aufgabe, die Fixierelemente 42 beziehungsweise Kugeln in ihrer Lage zum Deckel 38 zu halten, so daß eine exakte und reproduzierbare Rückstellung des Auslöseflansches 36 erreicht ist. Weiterhin dient der Kugelkäfig 46 als Abstützung für den Auslöseflansch 36 beim Verkippen oder Verschwenken desselben.

Wirken Kollisionskräfte nicht ausschließlich in Z-Richtung, sondern in X- und/oder Y-Richtung 32, 34, so kippt der Auslöseflansch 36 beispielsweise in die in Figur 4 dargestellte Position, wobei eines oder einige wenige der Fixierelemente 42 beziehungsweise der Kugelkäfig 46 als Kipp- oder Schwenklager dienen. Bei einer Kipp- oder Schwenkbewegung des Auslöseflansches 36 werden nur eine oder einige wenige der ersten Federelemente 22 auf Kompression beziehungsweise Stauchung beansprucht und beim Einsatz beispielsweise von neun ersten Federelementen 22 können etwa ein bis drei erste Federelemente 22 auf Stauchung beansprucht werden. Da die Federhärte des zweiten Federelements 24 etwa dem drei- bis vierfachen der Federhärte eines einzigen ersten Federelements 22 entspricht, werden bei einer Kollision in X- und/oder Y-Richtung 32, 34 zunächst das eine oder einige wenige der ersten Federelemente 22 gestaucht, wobei sich die Lochplatte 54 aufgrund ihrer verschiebbaren Führung ausschließlich in Z-Richtung 30 wiederum in Richtung des Bodens des Gehäuses 20 verschiebt. Erst dann, wenn die Kippbewegung des Auslöseflansches 36 so stark ist, daß mehr als drei oder etwa vier erste Federelemente 22 auf Kompression oder Stauchung beansprucht werden, wird auch das zweite Federelement 24 einer Stauchung unterworfen, wobei die Lochplatte 54 auf jeden Fall um die Summe der Federwege beider Federelemente 22, 24 verfahren wird.

Auch in diesem Fall wird bei Überschreiten eines vorgegeben Kippwertes beziehungsweise Verfahrweges der Lochplatte 54 der Schalter 64 mittels der Nase 62 betätigt, so daß Handlinggerät 14 und/oder Werkzeug 12 ausgeschaltet werden können. Nach Beseitigung des Hindernisses beziehungsweise Kollisionsgrundes schwenkt der Auslöseflansch 36 von der in Figur 4 angezogenen Position in die Neutralstellung der Figur 1 zurück, die aufgrund der Fixierelemente 42 eindeutig und genau definiert ist.

Es versteht sich, daß auch mehrere Sicherheitsschaltungen 26 mit Schalter 64 und zugeordneter Nase 62 dem Werkzeughalter 10 zugeordnet sein können.

Die erfindungsgemäße Zweistufigkeit des eingesetzten Federsystems wird über die konstruktive Kraftaufteilung zwischen ersten Federelementen 22 und dem wenigstens einen zweiten Federelement 24 erreicht. Hierdurch wird ermöglicht, daß in Z-Richtung 30 wirkende Stöße von dem zweiten Federelement 24 und in X- und/oder Y-Richtung 32, 34 wirkende Stöße von einem oder einigen wenigen ersten Federelementen 22 aufgenommen werden können. Die erste obere Stufe bestehend aus ersten Federelementen 22 dient demzufolge der Aufnahme von in X- und/oder Y-Richtung 32, 34 und die untere aus dem wenigstens einen zweiten Federelement 24 bestehende Stufe zur Aufnahme in Z-Richtung 30 wirkenden Kräften.

### Bezugszeichenliste

- 10: Werkzeughalter
- 12: Werkzeug
- 14: Handlinggerät
- 16: erste Halterung
- 18: zweite Halterung
- 20: Gehäuse
- 22: erstes Federelement
- 24: zweites Federelement
- 26: Sicherheitsschaltung
- 28: Bauteil
- 29: Zapfen
- 30: Z-Richtung
- 32: X-Richtung
- 34: Y-Richtung
- 36: Auslöseflansch
- 38: Deckel
- 40: Außenringbereich
- 42: Fixierelement
- 44: Einsenkung
- 46: Kugelkäfig
- 48: Federkolben
- 50: Hohlzapfen
- 52: Bohrung
- 54: Lochplatte
- 56: Loch
- 58: Kolben
- 60: Druckfeder
- 62: Nase
- 64: Schalter

## Patentansprüche

1. Werkzeughalter (10) zur Kupplung eines Werkzeuges (12), insbesondere eines Schweißbrenners oder Schneidbrenners, an einem Handlinggerät (14), insbesondere einem Industrieroboter, mit einer ersten Halterung (16) zur Befestigung der Werkzeuges (12) am Werkzeughalter (10) und mit einer zweiten Halterung (18), zum Beispiel einem Gehäuse (20), zur Befestigung des Werkzeughalters (10) am Handlinggerät (14), wobei die ersten und zweiten Halterungen (16, 18) relativ zueinander gegen eine Federvorspannung von Federelementen (22, 24) auslenkbar beziehungsweise verstellbar sind, und mit einer Sicherheitsschaltung (26) zur Deaktivierung des Handlinggerätes (14) und/oder des Werkzeuges (12) bei einer Überschreitung vorbestimmter Auslenkungen beziehungsweise Verstellungen, wobei ein mit der ersten Halterung (16) verbundenes Bauteil (28) in Z-Richtung (30) (Werkzeughalter-Längsachse) verstellbar beziehungsweise verfahrbar und in X- und/oder Y-Richtung (32, 34) auslenkbar, beispielsweise verschwenkbar oder kippbar, bezüglich der zweiten Halterung (18) ist, und bei Auslenkung in X- und/oder Y-Richtung (32, 34) ein einziges oder einige von mehreren ersten Federelementen (22) mit einer ersten Federhärte und bei Verstellung in Z-Richtung (30) wenigstens ein zweites Federelement (24) mit einer zweiten, unterschiedlichen Federhärte beansprucht und das oder die ersten Federelemente (22) und das wenigstens eine zweite Federelement (24) in Serie angeordnet beziehungsweise zweistufig einander nachgeschaltet angeordnet sind, **dadurch gekennzeichnet, dass** die Federhärte eines einzigen ersten Federelements (22) kleiner als die Federhärte des wenigstens eines zweiten Federelements (24) ist.

2. Werkzeughalter nach Anspruch 1, **dadurch gekennzeichnet, daß** die Federhärte der Summe der ersten Federelemente (22) größer als die Federhärte des wenigstens einen zweiten Federelements (24) ist.

3. Werkzeughalter nach Anspruch 1 oder 2, **dadurch gekennzeichnet, dass** die mehreren ersten Federelemente (22) jeweils die erste Federhärte aufweisen.

4. Werkzeughalter nach einem der vorhergehenden Ansprüche, **dadurch gekennzeichnet, daß** das Bauteil (28) als, insbesondere flächiger, tellerförmiger oder ringförmiger Auslöseflansch (36) und die zweite Halterung (18) als den Auslöseflansch (36) und die Federelemente (22, 24) aufnehmendes, bevorzugt topfförmiges Gehäuse (20) ausgebildet sind, wobei das Gehäuse (20) bevorzugt mit einem verschraubbaren Deckel (38) verschließbar ist.

5. Werkzeughalter nach Anspruch 4, **dadurch gekennzeichnet, daß** der Auslöseflansch (36) in der Neutralstellung unter Wirkung der Federvorspannung, insbesondere in einem Außenringbereich (40), mehreren ringförmig, insbesondere kreisringförmig im Gehäuse (20) angeordneten Fixierelementen (42), zum Beispiel Kugeln, anliegt.

6. Werkzeughalter nach Anspruch 5, **dadurch gekennzeichnet, daß** der Auslöseflansch (36), insbesondere in einem Außenringbereich (40) Einsenkungen (44) aufweist, die mit der Position der Fixierelemente (42) korrespondieren und diese teilweise aufnehmen, wobei die Fixierelemente (42) bevorzugt mittels einer Haltevorrichtung, wie einem Kugelkäfig (46), gehalten sind.

7. Werkzeughalter nach einem der vorhergehenden Ansprüche, **dadurch gekennzeichnet, daß** der Auslöseflansch (36) in einem unterseitigen Außenringbereich (40) von mehreren, insbesondere vier bis zwölf, bevorzugt neun ersten, ein Federpaket bildenden Federelementen (22) mit Federvorspannung beaufschlagt ist.

8. Werkzeughalter nach einem der vorhergehenden Ansprüche, **dadurch gekennzeichnet, daß** die ersten Federelemente (22) zwischen dem Bauteil (28) und einem in Z-Richtung (30) verstellbaren oder verfahrbaren, insbesondere tellerförmigen Federkolben (48) eingespannt sind, der seinerseits unterseitig von der Federvorspannung des wenigstens einen zweiten Federelements (24) beaufschlagt ist.

9. Werkzeughalter nach Anspruch 8, **dadurch gekennzeichnet, daß** der Federkolben (48) einen zentralen Hohlzapfen (50) aufweist, der in einer Bohrung (52) des Gehäuses (20) in Z-Richtung (30) verschiebbar geführt ist.

10. Werkzeughalter nach einem der vorhergehenden Ansprüche, **dadurch gekennzeichnet, daß** zwischen dem Bauteil (28) und dem Federkolben (48) eine Lochplatte (54) angeordnet ist, in deren Löchern (56) der ersten Federelemente (22) mit leichtem Spiel aufgenommen sind.

11. Werkzeughalter nach Anspruch 10, **dadurch gekennzeichnet, daß** die Lochplatte (54) einen zentralen Zapfen oder Kolben (58) aufweist, der in Z-Richtung (30) verschiebbar in dem Gehäuse (20), insbesondere in dem Hohlzapfen (50) geführt ist.

12. Werkzeughalter nach Anspruch 10 oder 11, **dadurch gekennzeichnet, daß** zwischen der Oberseite des Federkolbens (48) und der Unterseite der Lochplatte (54) eine Druckfeder gespannt ist.

13. Werkzeughalter nach einem der vorhergehenden Ansprüche, **dadurch gekennzeichnet, daß** am Bauteil (28) oder am Federkolben (48), bevorzugt an der Lochplatte (54) eine Nase (62), ein Schaltelement oder dergleichen angeordnet ist, dem ein Schalter (64) zugeordnet ist.

14. Werkzeughalter nach einem der vorhergehenden Ansprüche, **dadurch gekennzeichnet, daß** die Federhärte des zweiten Federelements (24) etwa dem drei- bis vierfachen der Federhärte eines einzigen ersten Federelements (22) der bevorzugt neun ersten Federelemente (22) entspricht.

15. Werkzeughalter nach einem der vorhergehenden Ansprüche, **dadurch gekennzeichnet, daß** die ersten Federelemente (22) jeweils im wesentlichen eine gleiche Federhärte besitzen.

16. Werkzeughalter nach einem der vorhergehenden Ansprüche, **dadurch gekennzeichnet, daß** die Federelemente (22, 24) als Druckfedern oder Schraubenfedern ausgebildet sind.

## Claims

1. Tool holder (10) for coupling a tool (12), particularly a welding torch or cutting torch, to a handling apparatus (14), particularly an industrial robot, comprising a first holder (16) for fastening the tool (12) to the tool holder (10), a second holder (18), for example a housing (20), for fastening the tool holder (10) to the handling apparatus (14), wherein the first and second holders (16, 18) are deflectable or adjustable relative to one another against a spring bias of spring elements (22, 24), and a safety circuit (26) for deactivation of the handling apparatus (14) and/or the tool (12) in the case of exceeding predetermined deflections or adjustments, wherein a component (28) connected with the first holder (16) is adjustable or movable in Z direction (30) (tool holder longitudinal axis) and deflectable in X direction and/or Y direction (32, 34), for example pivotable or tiltable, with respect to the second holder (18), and on deflection in X direction and/or Y direction (32, 34) a single or some or more first spring elements (22) with a first spring hardness is or are loaded and on adjustment in Z direction (30) at least one second spring element(24) with a second, different spring hardness is loaded and the first spring element or elements (22) and the at least one second spring element (22) are arranged in series or arranged in succession in two stages, **characterised in that** the spring hardness of a single first spring element (22) is less than the spring hardness of the at least one second spring element (24).

2. Tool holder according to claim 1, **characterised in that** the spring hardness of the sum of the first spring elements (22) is greater than the spring hardness of the at least one second spring element (24).

3. Tool holder according to claim 1 or 2, **characterised in that** the several first spring elements (22) each have the first spring hardness.

4. Tool holder according to one of the preceding claims, **characterised in that** the component (28) is constructed as, in particular, a flat, plate-shaped or ring-shaped release flange (36) and the second holder (13) is constructed as a preferably pot-shaped housing (20) receiving the release flange (36) and the spring elements (22, 24), wherein the housing (20) is preferably closable by a screwable cover (38).

5. Tool holder according to claim 4, **characterised in that** the release flange (36) in the neutral setting bears under the action of the spring bias, particularly in an outer annular region (40), against several annular, particularly circularly annular, fixing elements (42), for example balls, arranged in the housing (20).

6. Tool holder according to claim 5, **characterised in that** the release flange (36) has, particularly in an outer annular region (40), recesses (44) which correspond with the position of the fixing elements (42) and partly receive these, wherein the fixing elements (42) are preferably held by means of a retaining device, such as a ball cage (46).

7. Tool holder according to one of the preceding claims, **characterised in that** the release flange (36) is loaded in an underside outer annular region (40) with spring bias by several, particularly four to twelve, preferably nine, first spring elements (22) forming a spring packet.

8. Tool holder according to one of the preceding claims, **characterised in that** the first spring elements (22) are clamped in place between the component (28) and a spring piston (48), which is adjustable or movable in Z direction (30) and is, in particular, plate-shaped and which in turn is loaded at the underside by the spring bias of the at least one second spring element (24).

9. Tool holder according to claim 8, **characterised in that** the spring piston (48) has a central hollow pin (50) which is guided in a bore (52) of the housing (20) to be displaceable in Z-direction (30).

10. Tool holder according to one of the preceding claims, **characterised in that** arranged between the component (28) and the spring piston (48) is an apertured plate (54), in the apertures (56) of which the first spring elements (22) are received with slight play.

11. Tool holder according to claim 10, **characterised in that** the apertured plate (54) has a central pin or piston (54) which is guided in the housing (20), particularly in the hollow pin (50), to be displaceable in Z-direction (30).

12. Tool holder according to claim 10 or 11, **characterised in** a compression spring is stressed between the upper side of the spring piston (48) and the underside of the apertured plate (54).

13. Tool holder according to one of the preceding claims, **characterised in that** a lug (62), a switching element or the like, with which a switch (64) is associated, is arranged at the component (28) or at the spring piston (48), preferably in the apertured plate (54).

14. Tool holder according to one of the preceding claims, **characterised in that** the spring hardness of the second spring element (24) corresponds with approximately three to four times the spring hardness of a single first spring element (22) of the preferably nine first spring elements (22).

15. Tool holder according to one of the preceding claims, **characterised in that** the first spring elements (22) each have substantially the same spring hardness.

16. Tool holder according to one of the preceding claims, **characterised in that** the spring elements (22, 24) are formed as compression springs or helical springs.

## Revendications

1. Porte-outil (10) destiné à coupler un outil (12), en particulier un chalumeau de soudage ou un chalumeau de découpage, avec un dispositif de manutention (14), en particulier un robot industriel, comportant un premier support (16) pour la fixation de l'outil (12) sur le porte-outil (10) et comportant un deuxième support (18), tel qu'un boîtier (20), pour la fixation du porte-outil (10) sur le dispositif de manutention (14), le premier et le deuxième support (16, 18) pouvant être déviés ou réglés l'un par rapport à l'autre à l'encontre d'un effort élastique exercé par des ressorts (22, 24), et comportant un interrupteur de sécurité (26) pour désactiver le dispositif de manutention (14) et/ou l'outil (12) en cas de dépassement de déviations ou réglages prédéterminés, un élément (28) relié au premier support (16) pouvant être réglé ou déplacé dans la direction Z (30) (axe longitudinal du porte-outil) et pouvant être dévié, par exemple par pivotement ou basculement, dans une direction X et/ou Y (32, 34), par rapport au deuxième support (18) et, en cas de déviation dans la direction X et/ou Y (32, 34), un seul ou quelques-uns parmi une pluralité de premiers ressorts (22) peuvent être sollicités avec une première dureté de ressort et, en cas de réglage dans la direction Z (30), au moins un deuxième ressort (24) peut être sollicité par une deuxième dureté de ressort différente, et le ou les premiers ressorts (22) et ledit au moins un deuxième ressort (24) sont agencés en série, respectivement disposés l'un derrière l'autre sur deux niveaux, **caractérisé en ce que** la dureté de ressort d'un seul premier ressort (22) est plus faible que la dureté de ressort dudit au moins un deuxième ressort (24).

2. Porte-outil selon la revendication 1, **caractérisé en ce que** la dureté de ressort de la somme des premiers ressorts (22) est supérieure à la dureté de ressort dudit au moins un deuxième ressort (24).

3. Porte-outil selon la revendication 1 ou 2, **caractérisé en ce que** les plusieurs premiers ressorts (22) ont chacun la première dureté de ressort.

4. Porte-outil selon l'une quelconque des revendications précédentes, **caractérisé en ce que** l'élément (28) est conçu sous forme de collerette de déclenchement (36), en particulier plate, en forme de disque ou de bague, et le deuxième support (18) extérieur est conçu sous forme de boîtier (20), de préférence en forme de godet, recevant la collerette de déclenchement (36) et les ressorts (22, 24), le boîtier (20) pouvant être fermé de préférence par un couvercle (38) à visser.

5. Porte-outil selon la revendication 4, **caractérisé en ce que** la collerette de déclenchement (36) est, dans la position neutre, en appui, en particulier dans une zone annulaire extérieure (40), sous l'effet de la précontrainte des ressorts, sur plusieurs éléments de fixation (42), tels que des billes, agencés en forme d'anneau, en particulier en forme de cercle, dans le boîtier (20).

6. Porte-outil selon la revendication 5, **caractérisé en ce que** la collerette de déclenchement (36) comporte, en particulier dans une zone annulaire extérieure (40), comporte des creux (44), qui correspondent à la position des éléments de fixation (42) et reçoivent ceux-ci en partie, les éléments de fixation (42) étant maintenus de préférence par un dispositif de retenue, tel qu'une cage à billes (46).

7. Porte-outil selon l'une quelconque des revendications précédentes, **caractérisé en ce que** la collerette de déclenchement (36) est sollicitée avec précontrainte, dans une zone annulaire extérieure (40) du côté inférieur, par plusieurs, en particulier quatre à douze, de préférence neuf, premiers ressorts (22) formant un bloc ressort.

8. Porte-outil selon l'une quelconque des revendications précédentes, **caractérisé en ce que** les premiers ressorts (22) sont serrés entre l'élément (28) et un piston à ressort (48), en particulier en forme de disque, qui est réglable ou déplaçable dans la direction Z (30) et qui, pour sa part, du côté inférieur, est sollicité par la précontrainte dudit au moins un deuxième ressort (24).

9. Porte-outil selon la revendication 8, **caractérisé en ce que** le piston à ressort (48) comporte un tenon creux (50) central, qui est logé mobile dans la direction Z (30) dans une forure (52) du boîtier (20).

10. Porte-outil selon l'une quelconque des revendications précédentes, **caractérisé en ce que**, entre l'élément (28) et le piston à ressort (48), est agencée une platine perforée (54), dont les trous (56) reçoivent les premiers ressorts (22) avec un léger jeu.

11. Porte-outil selon la revendication 10, **caractérisé en ce que** la platine perforée (54) comporte un tenon ou piston (58) central, qui est logé de manière mobile dans la direction Z (30) dans le boîtier (20), en particulier dans le tenon creux (50).

12. Porte-outil selon la revendication 10 ou 11, **caractérisé en ce qu'**un ressort de pression est tendu entre le côté supérieur du piston à ressort (48) et le côté inférieur de la platine perforée (54).

13. Porte-outil selon l'une quelconque des revendications précédentes, **caractérisé en ce que**, sur l'élément (28) ou sur le piston à ressort (48), de préférence sur la platine perforée (54), est agencé un bec (62), un contacteur ou élément similaire, auquel est associé un interrupteur (64).

14. Porte-outil selon l'une quelconque des revendications précédentes, **caractérisé en ce que** la dureté de ressort du deuxième ressort (24) correspond environ à trois à quatre fois la dureté de ressort d'un seul premier ressort (22) des, de préférence neuf, premiers ressorts (22).

15. Porte-outil selon l'une quelconque des revendications précédentes, **caractérisé en ce que** les premiers ressorts (22) ont chacun la même dureté de ressort.

16. Porte-outil selon l'une quelconque des revendications précédentes, **caractérisé en ce que** les ressorts (22, 24) sont conçus sous forme de ressorts de pression ou de ressorts à boudin.
